# EUROPÄISCHE PATENTSCHRIFT

(11) **EP 4 619 859 B1**
(45) Veröffentlichungstag und Bekanntmachung des Hinweises auf die Patenterteilung: **18.02.2026**
(21) Anmeldenummer: 24746332.6
(22) Anmeldetag: 19.07.2024
(51) Int. Cl.: G06F 8/65, G06F 9/445, G06F 8/61, G06F 8/658

(54) **ÄNDERN DER KONFIGURATION VON STEUERGERÄTEN ZUM FREISCHALTEN VON FAHRZEUGFUNKTIONEN**
CHANGING THE CONFIGURATION OF CONTROL UNITS TO UNLOCK VEHICLE FUNCTIONS
MODIFICATION DE LA CONFIGURATION DES DISPOSITIFS DE CONTRÔLE POUR DÉBLOQUER DES FONCTIONS DU VÉHICULE

(30) Priorität: 05.08.2023 DE 102023003239
(43) Veröffentlichungstag der Anmeldung: 24.09.2025
(73) Patentinhaber: Mercedes-Benz Group AG, 70372 Stuttgart (DE)
(72) Erfinder: GLUSCHKOW, Eduard, 71034 Böblingen (DE); HÖRMANN, Jan, 71126 Gäufelden (DE); PORSCHATIS, Remo, 71101 Schönaich (DE); ENKE, Philipp, 71065 Sindelfingen (DE); RICHTER, Vanessa, 70597 Stuttgart (DE); STEINL, Lisbeth, 70178 Stuttgart (DE)
(74) Vertreter: Novagraaf Group
(86) Internationale Anmeldenummer: PCT/EP2024/070635
(87) Internationale Veröffentlichungsnummer: WO 2025/031764

(56) Entgegenhaltungen:
- EP-B1- 3 793 868

## Beschreibung

Die Erfindung betrifft ein Fahrzeug nach der im Oberbegriff von Anspruch 1 näher definierten Art.

Die Variantenvielfalt für einen Kunden bei der Konfiguration eines neu zu bestellenden Fahrzeugs ist hoch. So können neben der Grundausstattung diverse Sonderausstattungen hinzugebucht werden, wie eine unterschiedliche Motorisierung, Getriebeart, verschiedene Assistenzsysteme und dergleichen. Im Fahrzeug werden entsprechend unterschiedliche Fahrzeugkomponenten installiert, die das Bereitstellen der abweichenden Fahrzeugfunktionalitäten erlauben. Die jeweiligen Fahrzeugkomponenten werden dabei durch speziell zugeschnittene Steuerprogramme angesteuert. Um eine jeweilige Fahrzeugfunktionalität bereitstellen zu können, ist somit eine Kombination von Hardware- und Softwarekomponenten erforderlich.

Als Fahrzeugfunktionalität kann das Fahrzeug beispielsweise aufweisen: einen adaptiven Fernlichtassistenten, die Fähigkeit Lichtmuster mittels Matrix-Scheinwerfern in die Umgebung zu werfen, eine Hinterachslenkung, eine gesteigerte Motorleistung gegenüber einem Standardmodus, ein Navigationssystem, eine Dashcam, ein DAB+ Radio, eine Smartphoneintegration, einen TV-Tuner, eine Massagesitzfunktion, unterschiedlich konfigurierbare Fahrwerkseinstellungen und dergleichen. Einige Fahrzeugfunktionalitäten können das Installieren spezieller Fahrzeugkomponenten erfordern, während andere Fahrzeugfunktionalitäten lediglich durch das Anpassen des zugrundeliegenden Steuerprogramms bereitgestellt werden können. Die Fahrzeugfunktionalitäten werden auch als "On-Demand-Functions" bezeichnet.

Welche Fahrzeugfunktionalitäten, basierend auf den installierten Fahrzeugkomponenten, im späteren Betrieb nutzbar sind, wird während der Fahrzeugfertigung festgelegt und das Fahrzeug entsprechend gebaut und konfiguriert. Die Bordelektronik des Fahrzeugs ist hierzu in einen Hauptrechner und wenigstens einen kommunikativ an den Hauptrechner angebunden Subrechner unterteilt. Dabei dienen die jeweiligen Subrechner zum Ansteuern der jeweiligen Fahrzeugkomponenten, zur Bereitstellung der Fahrzeugfunktionalitäten. Der Hauptrechner ist dazu in der Lage die Subrechner zur Bereitstellung einer jeweiligen Fahrzeugfunktionalität zu konfigurieren. Hierzu werden entsprechende Informationen während der Fahrzeugproduktion per Diagnose- bzw. Variantenkodierung in einen manipulationssicheren Speicherbereich eines auf dem Hauptrechner bereitgestellten Freischaltmoduls hinterlegt.

Das Freischaltmodul stellt dann eine Information über eine entsprechende Schnittstelle an die jeweiligen Subrechner bereit, welche Fahrzeugfunktionalitäten jeweils bereitgestellt werden sollen und welche nicht. Hierzu wird ein Boolescher Wert in Form von True (aktiv) oder False (inaktiv) versendet. Der Stand der Technik sieht hierzu vor, dass für den jeweiligen Subrechner speziell angepasste Schnittstellen verwendet werden. Zum Übermitteln der jeweiligen Informationen an die verschiedenen Subrechner, versendet der Hauptrechner zyklische Bussignale über eine entsprechende Datenleitung. Aufgrund der hohen Anzahl verschiedener Schnittstellen und dem Erfordernis Bussignale zyklisch zu versenden, ist der Aufwand zum Konfigurieren der jeweiligen Subrechner vergleichsweise hoch. Die zugrundeliegende Datenleitung wird entsprechend für einen vergleichsweise langen oder hohen Zeitraum hoch ausgelastet, was das Übertragen sonstiger Daten einschränkt. Das jeweilige Freischaltsignal ist funktionsspezifisch, was den Programmieraufwand weiter erhöht. Zudem versenden die jeweiligen Subrechner ein entsprechendes funktionsspezifisches Antwortsignal. Somit existiert für jede Fahrzeugfunktionalität ein spezifisches Paar aus Freischalt und Antwortsignalen. Der Sachverhalt wird noch komplexer, da einige Fahrzeugfunktionalitäten auf mehrere Subrechner verteilt sein können. So sind beispielsweise zur Projektion von Lichtmustern in die Umgebung mittels Matrixscheinwerfer, zwei solcher Projektionsscheinwerfer anzusteuern. Zudem ist ein hoher Programmieraufwand notwendig, um bestehende Fahrzeugfunktionalitäten anzupassen oder neue Fahrzeugfunktionalitäten nachträglich im Fahrzeug zu implementieren.

Die DE 10 2020 109 379 A1 beschreibt ein Verfahren und System zum automatisierten Ausführen von Fahrzeugfunktionen. Die Druckschrift beschreibt das automatische Ausführen mehrerer Fahrzeugfunktionen beim Eintreffen eines Auslöseereignisses. So kann das Fahrzeug beispielsweise von selbst den Motor ausschalten, Fenster schließen, ein Automatikgetriebe auf Parken schalten, eine Feststellbremse aktivieren, die Zündung ausschalten, Türen öffnen und das Fahrzeugschloss verriegeln. Eine solche Ausführungsroutine kann beispielsweise von einem Paketlieferanten genutzt werden. Als Auslöseereignis kann der Paketlieferant beispielsweise einen speziellen Knopf im Fahrzeug betätigen, oder das Auslöseereignis wird automatisch vom Fahrzeug beispielsweise beim Erreichen einer bestimmten Geoposition ausgegeben. Ein sogenannter Dienst bündelt dabei verschiedene Fahrzeugfunktionen zu einem Themenkomplex und stellt diese über eine definierte Schnittstelle zur Verfügung. Der Dienst abstrahiert dabei fahrzeugspezifische Hardware- und/oder Softwareeigenschaften für das Generieren und Ausgeben entsprechender Steuersignale. Vorteilhafterweise ist die zugrundeliegende Schnittstelle unveränderbar, was eine Vereinheitlichung bei der Nutzung verschiedener Hardware- und/oder Softwareeigenschaften erlaubt. Dies ermöglicht eine universelle Implementierung.

Zudem offenbart die DE 10 2015 010 203 A1 ein Verfahren und System zum Betreiben eines Kraftfahrzeugs. Das Verfahren sieht das Erzeugen einer Fahrzeugfunktionsliste auf einem Server vor, enthaltend eine Definition der im Fahrzeug zur Nutzung freigegebenen und gesperrten Fahrzeugfunktionen. Die Fahrzeugfunktionsliste wird dann drahtlos auf eine fahrzeuginterne Steuereinrichtung übertragen und durch diese Verarbeitet. Die Steuereinheit steuert dann die Steuergeräte des Fahrzeugs zur entsprechenden Freigabe oder Sperrung der Fahrzeugfunktionen an.

Zudem offenbart die US 2022/0204012 A1 ein Verfahren und System zur Bereitstellung eines verbundenen Fahrzeugdienstes. Dabei erzeugt ein fahrzeuginternes Gerät eine erste Dienstliste, beschreibend die Nutzung von Fahrzeugfunktionen im Fahrzeug. Diese Dienstliste wird an einen Server übertragen, welcher aus der Dienstliste eine Anzahl ungenutzter Dienste ermittelt. Der Server erzeugt Anleitungsinformationen, welche an einen Nutzer ausgegeben werden. Anhand der Anleitungsinformationen lässt sich der Nutzer darüber informieren, welche ungenutzten Fahrzeugfunktionen zur Nutzung zur Verfügung stehen und wie hierzu vorgegangen werden muss.

Zudem offenbart die EP 1 967 435 B1 ein Verfahren zur adaptiven Konfigurationserkennung. Dabei empfängt ein zentrales Steuergerät in einem Fahrzeug identifizierende Informationen von datentechnisch an das Steuergerät angebundenen weiteren Komponenten, wodurch das Steuergerät erkennt, dass entsprechende weitere Komponenten im Fahrzeug vorhanden sind. Für diese Komponenten lädt dann das Steuergerät passende Software aus einem Datenspeicher. Das Steuergerät schreibt anschließend eine Information in einen Speicher, beschreibend welche Komponenten erkannt wurden. Passen nach einem erneuten Hochfahren des Steuergeräts die identifizierenden Informationen und die abgespeicherten Informationen aufgrund des Wechsels einer Komponente nicht mehr zusammen, so passt das Steuergerät entsprechende Informationen so an, dass die betroffene Komponente als nicht vorhanden gilt.

Zudem offenbart die EP 3 793 868 B1 ein Verfahren zum Betreiben einer Steuervorrichtung eines Infotainmentsystems eines Fahrzeugs zur Freischaltung von Funktionen. Im Fahrzeug kann ein Nutzer eine Funktion anfordern. Daraufhin stellt das Fahrzeug ein Anforderungssignal an einen vom Fahrzeughersteller betriebenen Server zum Freischalten der Funktion. Der Server überprüft die Zulässigkeit der Freigabe und gibt eine Anbindung der Steuervorrichtung an einen Freischaltrechner frei, wenn die Freigabe zulässig ist. Daraufhin erfolgt die kryptografisch abgesicherte Freischaltung der Funktion im Fahrzeug.

Ferner offenbart die US 2018/0196660 A1 ein Verfahren und System zur Umprogrammierung von Steuergeräten in einem Fahrzeug über Funk. Dabei wird ein erstes verschlüsseltes Paket, umfassend verschlüsselt Audiodateien und ein zweites verschlüsseltes Paket, umfassend Daten und Fahrzeuginformationen, erzeugt. Beide verschlüsselten Pakete werden miteinander vermischt und über Funk übertragen. Die vermischten Pakete werden durch ein Fahrzeug empfangen und dort gespeichert. Im Fahrzeug werden die vermischten Pakete durch eine entsprechende Modulation wieder voneinander getrennt und jeweils entschlüsselt. Anhand der aus dem zweiten verschlüsselten Paket entnommenen Daten wird ein Steuergerät im Fahrzeug umprogrammiert.

Der vorliegenden Erfindung liegt die Aufgabe zugrunde ein verbessertes Fahrzeug anzugeben, welches sich durch einen effizienten internen Kommunikationsablauf der zugrunde liegenden Bordelektronik im Zusammenhang mit der Bereitstellung unterschiedlicher Fahrzeugfunktionalitäten auszeichnet.

Erfindungsgemäß wird diese Aufgabe durch ein Fahrzeug mit den Merkmalen des Anspruchs 1 gelöst. Vorteilhafte Ausgestaltungen und Weiterbildungen ergeben sich aus den hiervon abhängigen Ansprüchen.

Ein gattungsgemäßes Fahrzeug, umfassend einen Hauptrechner und wenigstens einen kommunikativ an den Hauptrechner angebundenen Subrechner, wobei ein jeweiliger Subrechner zur Ausführung zumindest eines Steuerprogramms zum Ansteuern einer Fahrzeugkomponente zur Bereitstellung einer Fahrzeugfunktionalität eingerichtet ist, und der Hauptrechner ein Freischaltmodul aufweist, welches dazu eingerichtet ist ein Freischaltsignal an den wenigstens einen Subrechner zum Aktivieren oder Deaktivieren des Steuerprogramms zu versenden, sieht vor, dass das Freischaltmodul einen Ereignisdatensatz umfasst, wobei der Ereignisdatensatz eine Zusammenstellung aller generell verfügbaren Fahrzeugfunktionalitäten und ihren jeweiligen Soll-Aktivierungszustand enthält, wobei erfindungsgemäß das Freischaltmodul dazu eingerichtet ist den Ereignisdatensatz als Freischaltsignal an alle angebundenen Subrechner zu versenden, wobei ein jeweiliger Subrechner dazu eingerichtet ist den Ereignisdatensatz zu empfangen, zumindest den Soll-Aktivierungszustand für die durch den respektiven Subrechner bereitstellbaren Fahrzeugfunktionalitäten aus dem Ereignisdatensatz auszulesen und das jeweilig zugrunde liegende Steuerprogramm gemäß des jeweiligen Soll-Aktivierungszustands zu konfigurieren.

Das durch den Hauptrechner und die Subrechner des erfindungsgemäßen Fahrzeugs bereitgestellte Kommunikationsschema zeichnet sich durch eine gesteigerte Effizienz aus, was eine effiziente Nutzung der Bordelektronik und der für die kommunikative Anbindung verwendeten Datenleitung erlaubt. Mit Hilfe des Ereignisdatensatzes ist eine Vereinheitlichung und damit Standardisierung der Kommunikationsschnittstelle zwischen dem Hauptrechner und den respektiven Subrechnern sichergestellt. Dies vereinfacht den Programmieraufwand für die Programmierer. Über die Datenleitung des Fahrzeugs muss dann lediglich der Ereignisdatensatz an die Subrechner verteilt werden. Somit müssen keine funktionsspezifischen Freischaltsignale zyklisch über die Datenleitung vom Hauptrechner an die Subrechner versendet werden, wodurch die Auslastung der Datenleitung sinkt. Der Hauptrechner stellt dabei den Ereignisdatensatz über die Datenleitung zum Abrufen zur Verfügung. Generell ist es dabei möglich, dass sämtliche Subrechner den Ereignisdatensatz während der Bereitstellung durch den Hauptrechner abfragen. Für eine besonders effiziente Nutzung der Datenleitung ist es auch möglich, dass eine Auswahl der Subrechner der Bordelektronik des Fahrzeugs den Ereignisdatensatz "abonnieren", sodass der Lesezugriff über die Datenleitung weiter gesenkt werden kann. Diejenigen Subrechner, die den Ereignisdatensatz dabei nicht abonniert haben, können zudem effizienter arbeiten, da die jeweils verfügbaren Hardwareressourcen und Rechenkapazitäten somit für andere Aufgaben bereitstehen.

Der Ereignisdatensatz kann beispielsweise als eine Liste oder Tabelle interpretiert werden. In den einzelnen Zeilen der Tabelle sind dann die generell verfügbaren Fahrzeugfunktionalitäten aufgezählt. In den jeweiligen Spalten ist der Soll-Aktivierungszustand für das respektive Fahrzeug hinterlegt. Der Ereignisdatensatz kann analog zum Stand der Technik während der Fertigung des Fahrzeugs erzeugt und im Hauptrechner hinterlegt werden. Der Soll-Aktivierungszustand enthält entweder den Eintrag aktiv, inaktiv oder nicht verfügbar. In den jeweiligen Subrechnern ist hinterlegt, welche Fahrzeugfunktionalität jeweils bereitstellbar ist. Die jeweiligen Subrechner lesen dann gezielt diejenigen Zeilen des Ereignisdatensatzes aus, welche Einträge für die vom jeweiligen Subrechner bereitstellbaren Fahrzeugfunktionalitäten enthalten. Hierdurch kann der Auslastungsgrad der jeweiligen Subrechner reduziert werden, was die Effizienz der Bordelektronik weiter verbessert.

Liest der jeweilige Subrechner als Soll-Aktivierungszustand "Aktiv" aus, so wird das jeweilige Steuerprogramm zur Bereitstellung der Fahrzeugfunktionalität aktiviert. Wird hingegen als Soll-Aktivierungszustand "Inaktiv" ausgelesen, so wird das Steuerprogramm derartig konfiguriert, dass die jeweilige Fahrzeugfunktionalität im Fahrzeug nicht genutzt werden kann. Steht die jeweilige Fahrzeugfunktionalität aufgrund der physischen Konfiguration des Fahrzeugs, also aufgrund fehlender physischer Fahrzeugkomponenten, nicht zur Verfügung, so enthält der Ereignisdatensatz für die jeweilige Fahrzeugfunktionalität den Eintrag "Nicht verfügbar".

Die Gesamtheit der generell verfügbaren Fahrzeugfunktionalitäten wird dabei ebenfalls vom Fahrzeughersteller definiert. Der Ereignisdatensatz enthält somit alle generell verfügbaren Fahrzeugfunktionalitäten, was eine Vereinheitlichung bzw. Standardisierung ermöglicht, unabhängig von den tatsächlich im Fahrzeug verbauten Fahrzeugkomponenten.

Bei dem Fahrzeug kann es sich um ein beliebiges Straßenfahrzeug wie einen Pkw, Lkw, Transporter, Bus oder dergleichen handeln. Generell könnte es sich auch um Schienenfahrzeug, Wasserfahrzeug, Luftfahrzeug oder dergleichen handeln.

Der Hauptrechner kann auch als zentraler Bordcomputer bezeichnet werden. Besonders bevorzugt ist der Hauptrechner in die sogenannte Head-Unit integriert, bzw. dient zur Bereitstellung von Funktionalitäten, die über die Head-Unit des Fahrzeugs nutzbar sind. Die jeweiligen Subrechner können auch als Steuergeräte bezeichnet werden. Die Datenleitung zwischen dem Hauptrechner und den Subrechnern kann kabellos oder auch drahtgebunden realisiert sein. Es sind auch Mischformen denkbar. Es können zudem die verschiedensten Kommunikationsprotokolle genutzt werden, wie CAN, FlexRay, Lin, Ethernet und dergleichen. Besonders bevorzugt handelt es sich um ein CAN-Bussystem.

Das Freischaltmodul ist dabei durch Hard- und Softwarekomponenten ausgebildet. So nutzt das Freischaltmodul verschiedene Hardwarekomponenten des Hauptrechners wie mehrere Speicherelemente und Ausführungseinheiten. Dabei können auf die verschiedenen Hardwarekomponenten verteilte Softwarekomponenten zusammenwirken.

Der Ereignisdatensatz wird vom Hauptrechner in Abhängigkeit eines Ereignisses an die Subrechner versendet, was auch als "eventbasiert" bezeichnet wird.

Eine weitere vorteilhafte Ausgestaltung des erfindungsgemäßen Fahrzeugs sieht vor, dass das Freischaltmodul ferner dazu eingerichtet ist, den Ereignisdatensatz während einer Zeitdauer mehrmals hintereinander zu versenden. Generell besteht die Möglichkeit, dass einzelne Subrechner während dem Versenden bzw. Bereitstellen des Ereignisdatensatzes durch den Hauptrechner ausgelastet sind. In diesem Falle können die jeweiligen Subrechner den Ereignisdatensatz nicht auslesen. Um eine entsprechende Konfiguration der durch die jeweiligen Subrechner ausgeführten Steuerprogramme sicherzustellen, versendet entsprechend das Freischaltmodul bevorzugt den Ereignisdatensatz während der Zeitdauer mehrmals hintereinander. Sobald ein jeweiliger Subrechner die aktuell ausgeführte Rechenoperation beendet hat, kann der jeweilige Subrechner dann den Ereignisdatensatz vom Hauptrechner abgreifen. Die Zeitdauer kann dabei fest vorgegeben sein oder auch in Abhängigkeit verschiedener Ereignisse unterschiedlich lang ausgestaltet sein. Befindet sich beispielsweise das Fahrzeug in einem Zustand, welcher dazu führt, dass die jeweiligen Subrechner tendenziell stärker ausgelastet sind, so kann eine im Vergleich größere Zeitdauer gewählt werden als bei einem Zustand, indem die einzelnen Subrechner weniger stark ausgelastet sind.

Entsprechend einer weiteren vorteilhaften Ausgestaltung des erfindungsgemäßen Fahrzeugs, ist ein jeweiliger Subrechner dazu eingerichtet, ein Abfragesignal an den Hauptrechner zu versenden und der Hauptrechner ist dazu eingerichtet, als Antwort auf das Abfragesignal den Ereignisdatensatz zumindest an den das Abfragesignal ausgebenden Subrechner zu versenden. Hierdurch lässt sich die Effizienz der Bordelektronik, bzw. des der Bordelektronik zugrundeliegenden Kommunikationsschemas noch weiter steigern. Durch das Übermitteln des Abfragesignals an den Hauptrechner lässt sich das Versenden bzw. Bereitstellen des Ereignisdatensatzes durch den Hauptrechner gezielt veranlassen, sodass die verwendete Datenleitung für eine noch kürzere Zeitdauer durch die Bereitstellung des Ereignisdatensatzes beansprucht wird. Insbesondere versendet ein Subrechner ein Abfragesignal an den Hauptrechner, wenn der jeweilige Subrechner den initial versendete Ereignisdatensatz verpasst hat, beispielsweise aufgrund einer hohen Auslastung.

Das Bereitstellen des Ereignisdatensatzes durch das Freischaltmodul kann in diesem Zusammenhang auch als sogenannter "Service" bezeichnet werden. Der Ereignisdatensatz kann auch als Ereignis oder "Event" bezeichnet werden. Das Abfragesignal kann dann in diesem Zusammenhang auch als sogenannte "Methode" bezeichnet werden.

Eine weitere vorteilhafte Ausgestaltung des erfindungsgemäßen Fahrzeugs sieht ferner vor, dass ein jeweiliger Subrechner ferner dazu eingerichtet ist, als Antwort auf den empfangenen Ereignisdatensatz ein Antwortsignal an den Hauptrechner zu versenden, wobei das Antwortsignal zumindest die durch den respektiven Subrechner bereitstellbaren Fahrzeugfunktionalitäten mit der jeweils vorgenommenen Konfiguration der zugrunde liegenden Steuerprogramme enthält. Auch das Antwortsignal kann in diesem Zusammenhang als "Methode" bezeichnet werden. Durch das Übermitteln des Antwortsignals von den jeweiligen Subrechnern an den Hauptrechner, kann dem Hauptrechner bzw. dem Freischaltmodul vermittelt werden, wie die jeweiligen Subrechner auf den Ereignisdatensatz reagiert haben. Zum Bestätigen der erfolgreichen Konfiguration der jeweiligen Steuerprogramme zur Bereitstellung der jeweiligen Fahrzeugfunktionalitäten ist es dann ebenfalls entsprechend nicht mehr erforderlich, funktionsspezifische Antwortsignale über die Datenleitung zu versenden, sondern nach dem durch den Ereignisdatensatz definierten Standardformat implementierte Antwortsignale. Dies erleichtert die Implementierung des zugrundeliegenden beschriebenen Kommunikationsschemas noch weiter.

Ergänzend zur konfigurierten Fahrzeugfunktionalität und der vorgenommenen Konfiguration, kann das Antwortsignal ferner eine Kategorie enthalten, welche den jeweiligen Klienten identifiziert, der die Methode abruft.

Entsprechend einer weiteren vorteilhaften Ausgestaltung des erfindungsgemäßen Fahrzeugs, ist der Hauptrechner ferner dazu eingerichtet, den Ereignisdatensatz bei jedem Starten des Fahrzeugs und/oder Aktivieren der Bordelektronik erneut zu versenden. Die jeweilige Konfiguration der Steuerprogramme kann persistent in den jeweiligen Subrechnern gespeichert werden. In einzelnen Subrechnern kann es jedoch nicht möglich sein, diese Information persistent zu speichern. Durch das erneute Versenden des Ereignisdatensatzes bei jedem Fahrzeugstart bzw. Aktivieren der Bordelektronik lassen sich entsprechend die jeweiligen Subrechner erneut konfigurieren. Zudem kann es möglich sein, dass Fahrzeugkomponenten des Fahrzeugs geändert oder ausgetauscht werden, was ein erneutes Konfigurieren der jeweiligen Steuerprogramme der Subrechner erfordert. Somit lässt sich gewährleisten, dass die jeweiligen Subrechner bzw. Steuerprogramme zu jeder Zeit korrekt konfiguriert sind. Das Starten des Fahrzeugs bzw. Aktivieren der Bordelektronik eignet sich hierbei besonders als Ereignis zum Versenden des Ereignisdatensatzes, da hierdurch die Nutzung des Fahrzeugs, und damit der Fahrzeugfunktionalitäten, beginnt. Das Konfigurieren der Steuerprogramme bzw. der Subrechner zum Beginn der jeweiligen Nutzphase gewährleisten somit die korrekte Konfiguration, sodass der jeweilige Fahrzeugnutzer sein Fahrzeug "wie beim Fahrzeughersteller bestellt" nutzen kann.

Eine weitere vorteilhafte Ausgestaltung des erfindungsgemäßen Fahrzeugs sieht ferner vor, dass der Hauptrechner ferner dazu eingerichtet ist, einen Aktualisierungsdatensatz zu empfangen, wobei der Aktualisierungsdatensatz Änderungen des Ereignisdatensatzes enthält, und den Ereignisdatensatz entsprechend der Änderungen anzupassen. Mit Hilfe des Aktualisierungsdatensatzes ist somit eine Aktualisierung des Ereignisdatensatzes möglich. Wird die Fahrzeugkonfiguration geändert, werden also beispielsweise Fahrzeugkomponenten ausgetauscht, neue Fahrzeugkomponenten installiert oder soll eine Funktionsdrosselung oder Funktionssperre aufgehoben werden, so kann der im Fahrzeug hinterlegte Ereignisdatensatz angepasst werden, um auch durch die geänderten bzw. neuen Fahrzeugkomponenten bereitstellbaren Fahrzeugfunktionalitäten bzw. die vormals künstlich eingeschränkten Fahrzeugfunktionalitäten entsprechend nutzen zu können.

Bevorzugt umfasst das Fahrzeug dabei eine Telekommunikationseinheit, welche dazu eingerichtet ist, den Aktualisierungsdatensatz drahtlos von einer zentralen Recheneinrichtung zu empfangen und an den Hauptrechner weiterzuleiten. Generell könnte der Aktualisierungsdatensatz auf verschiedene Art und Weise in das Fahrzeug eingebracht werden, beispielsweise per Onbord-Diagnoseschnittstelle während des Aufenthalts des Fahrzeugs in einer Werkstatt. Dies erfordert jedoch das Aufsuchen der Werkstatt. Der Komfort für den Fahrzeugnutzer kann durch das drahtlose Übermitteln des Aktualisierungsdatensatzes gesteigert werden. Das Einbringen drahtloser Updates wird auch als "Over-The-Air (OTA)" Update bezeichnet. Bei der zentralen Recheneinrichtung kann es sich um einen Server oder Serververbund handeln. Die zentrale Recheneinrichtung kann über das Internet zugänglich sein und in diesem Zusammenhang auch als Cloudserver bezeichnet werden. Die Telekommunikationseinheit kann eine Verbindung der Bordelektronik zum Internet per Mobilfunk herstellen. Zum Aufbauen der Kommunikationsverbindung kommen auch andere drahtlose Kommunikationstechnologien infrage, wie beispielsweise die Verwendung von Wi-Fi. Die Vorzüge der vereinheitlichten Schnittstelle in Form des Ereignisdatensatzes kommen, wie auch beim initialen Konfigurieren der Subrechner bzw. der Steuerprogramme, besonders zur Geltung. So müssen keine vereinzelten funktionsspezifischen Signale angepasst werden, sondern eine zentrale Überarbeitung des Ereignisdatensatzes reicht aus.

Eine weitere vorteilhafte Ausgestaltung des Fahrzeugs sieht ferner vor, dass ein jeweiliger Subrechner dazu eingerichtet ist, Änderungen für bestehende Steuerprogramme und/oder neue Steuerprogramme zu empfangen. Somit ist es nicht nur möglich bestehende oder neue Fahrzeugfunktionalitäten im Nachhinein freizuschalten oder zu sperren, sondern es können auch noch die jeweiligen zugrundeliegenden Steuerprogramme an sich angepasst werden. Hierdurch können gänzlich neue Funktionalitäten in das Fahrzeug eingebracht werden, oder bestehende Funktionalitäten verändert werden. So können Fehler, auch als "Bugs" bezeichnet, behoben werden, Sicherheitslücken geschlossen werden, neue Funktionalitäten bereitgestellt werden und dergleichen.

Die Änderungen der Steuerprogramme bzw. neue Steuerprogramme können dabei analog zum Aktualisierungsdatensatz auf verschiedene Art und Weise zu verschiedenen Zeitpunkten bzw. Ereignissen in das Fahrzeug eingebracht werden. So ist auch eine Over-The-Air Übertragung oder das Installieren während eines Werkstattaufenthalts denkbar.

Weitere vorteilhafte Ausgestaltungen des erfindungsgemäßen Fahrzeugs ergeben sich auch aus den Ausführungsbeispielen, welche nachfolgend unter Bezugnahme auf die Figuren näher beschrieben werden.

Dabei zeigen:
- Fig. 1: eine schematisierte Darstellung der Systemarchitektur der eines erfindungsgemäßen Fahrzeugs zugrundeliegenden Bordelektronik;
- Fig. 2: eine schematisierte Darstellung der Konfiguration von Steuerprogrammen gemäß dem Stand der Technik; und
- Fig. 3: eine schematisierte Darstellung der erfindungsgemäßen Konfiguration von Subrechnern zur Bereitstellung von Fahrzeugfunktionalitäten.

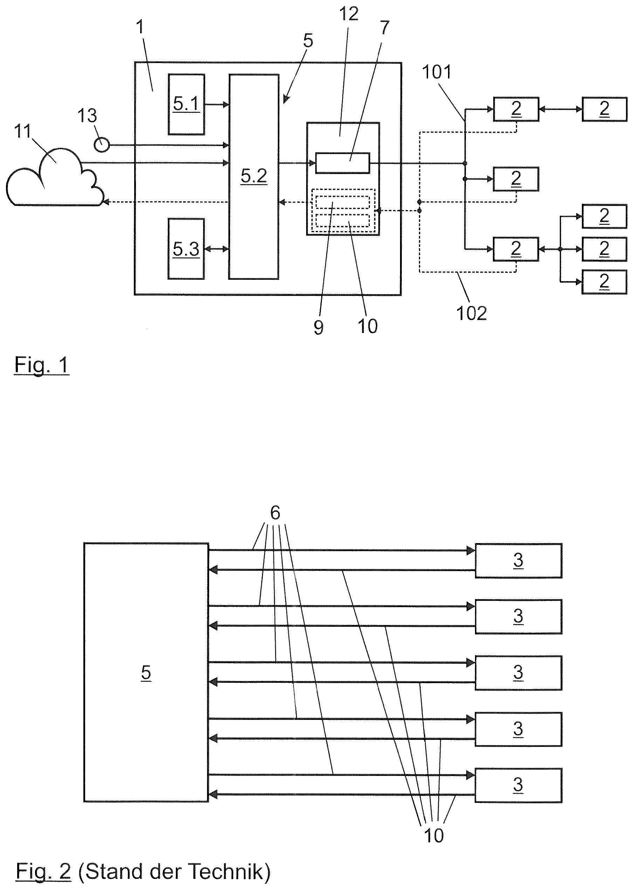

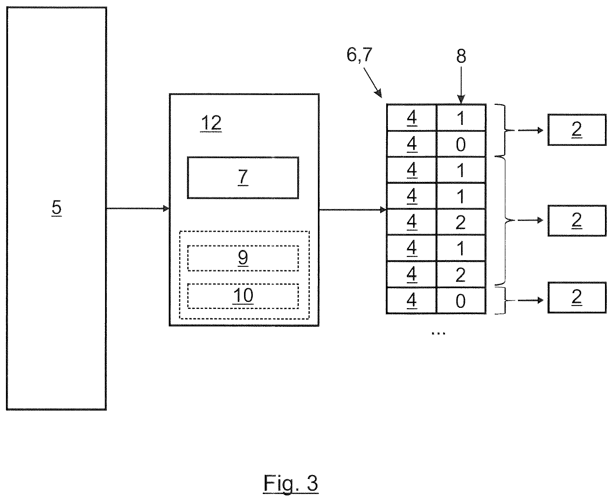

Ein erfindungsgemäßes Fahrzeug verfügt über die in Figur 1 stark idealisiert dargestellte Systemarchitektur. Dargestellt sind ein Hauptrechner 1, welcher kommunikativ über eine nicht näher dargestellte Datenleitung an mehrere Subrechner 2 angebunden ist. Dabei können Subrechner 2 direkt oder auch mittelbar über weitere Subrechner 2 an den Hauptrechner 1 angeschlossen sein. Ein jeweiliger Subrechner 2 ist zur Ausführung zumindest eines in Figur 2 gezeigten Steuerprogramms 3 zum Ansteuern einer nicht näher dargestellten Fahrzeugkomponente zur Bereitstellung einer in Figur 3 dargestellten Fahrzeugfunktionalität 4 eingerichtet. Je nach Konfiguration des Fahrzeugs können dabei die unterschiedlichsten Fahrzeugfunktionalitäten 4 im Fahrzeug genutzt bzw. bereitgestellt werden. Dabei gilt es das Fahrzeug derartig zu konfigurieren, dass die Nutzung der jeweiligen Fahrzeugfunktionalitäten 4 entweder freigegeben wird oder blockiert wird. So sollen genau die Fahrzeugfunktionalitäten 4 nutzbar sein, die der jeweilige Fahrzeugnutzer für sein Fahrzeug bei der Herstellung bzw. beim Kauf erworben hat. Es ist auch möglich Fahrzeugfunktionalitäten 4 nachträglich zu implementieren bzw. nachzurüsten.

Der Hauptrechner 1 weist hierzu ein Freischaltmodul 5 auf. Das Freischaltmodul 5 kann auf mehrere Untermodule, beispielsweise drei Untermodule 5.1. 5.2 und 5.3, verteilt sein. Im Untermodul 5.1 kann beispielsweise eine Variantenkodierung gespeichert sein. Das Untermodul 5.2 bildet den eigentlichen Programmcode zur Ausführung der durch das Freischaltmodul 5 ausführbaren Verfahrensschritte aus bzw. umfasst diesen. Bei dem Untermodul 5.3 kann es sich beispielsweise um einen sicher beschreibbaren Speicher handeln, indem beispielsweise die im Fahrzeug verbauten Subrechner 2 gelistet sind, ein Antidiebstahl PIN hinterlegt ist und dergleichen.

Das Freischaltmodul 5 umfasst einen Ereignisdatensatz 7, der in Form eines Services 12 an die mit den Hauptrechner 1 angeschlossenen Subrechner 2 verteilt wird. Dabei kann ein Subrechner 2 den Ereignisdatensatz 7 auch an ein in Kommunikationsrichtung nachgelagerten Subrechner 2 weiterleiten. Der Ereignisdatensatz 7 umfasst eine Zusammenstellung aller generell verfügbaren Fahrzeugfunktionalitäten 4 und ihrer ebenfalls in Figur 3 dargestellten jeweiligen Soll-Aktivierungszustände 8. Das Freischaltmodul 5 ist dazu eingerichtet den Ereignisdatensatz 7 als Freischaltsignal 6 an alle angebundenen Subrechner 2 zu versenden. Die jeweiligen Subrechner 2 sind wiederum dazu eingerichtet den Ereignisdatensatz 7 zu empfangen, zumindest den jeweiligen Soll-Aktivierungszustand 8 für die durch den respektiven Subrechner 2 bereitstellbaren Fahrzeugfunktionalitäten 4 aus dem Ereignisdatensatz 7 auszulesen und das jeweilige zugrundeliegende Steuerprogramm 3 gemäß des jeweiligen Soll-Aktivierungszustands 8 zu konfigurieren.

Der Service 12 kann ferner ein Abfragesignal 9 und ein Antwortsignal 10 enthalten. Das Abfragesignal 9 und das Antwortsignal 10 umfassen eine Routine, die durch die jeweiligen Subrechner 2 anwendbar ist. So kann ein Subrechner 2 das Abfragesignal 9 an den Hauptrechner 1 übermitteln, um zu bewirken, dass der Hauptrechner 1 erneut den Ereignisdatensatz 7 versendet. Zudem können die Subrechner 2 nach dem Empfangen des Ereignisdatensatzes 7 und entsprechenden Konfigurierens der jeweiligen Steuerprogramme 3 ein respektives Antwortsignal 10 an den Hauptrechner 1 zurück übermitteln, um diesen über die durchgeführte Konfiguration zu informieren.

Das Beziehen bzw. Auslesen des Ereignisdatensatzes 7 durch die Subrechner 2 ist durch einen Pfeil 101 angedeutet. Das Zurückübermitteln des Antwortsignals 10 sowie das Aussenden des Abfragesignals 9 ist durch einen Pfeil 102 angedeutet.

Der Ereignisdatensatz 7 kann von einer zentralen Recheneinrichtung 11 initial bereitgestellt worden sein, beispielsweise bei der Herstellung des Fahrzeugs. Zudem können Änderungen am Ereignisdatensatz 7 vorgenommen werden. Hierzu können auch während der Nutzphase des Fahrzeugs Aktualisierungsdatensätze, insbesondere drahtlos, von der zentralen Recheneinrichtung 11 an den Hauptrechner 1 verteilt werden. Nicht dargestellt sind dabei etwaige weitere Kommunikationskomponenten, wie eine Telekommunikationseinheit zur Anbindung des Hauptrechners 1 an das Internet per Mobilfunk.

Das Auslesen bzw. Manipulieren des Freischaltmoduls 5 ist zudem über einen Diagnosedienst 13 möglich.

Figur 2 zeigt in einer vergrößerten Darstellung wie das Freischaltmodul 5 gemäß einer aus dem Stand der Technik bekannten Vorgehensweise die jeweiligen Steuerprogramme 3 der Subrechner 2 zur Bereitstellung der jeweiligen Fahrzeugfunktionalitäten 4 konfiguriert. So sendet das Freischaltmodul 5 zyklisch funktionsspezifische Freischaltsignale 6 für jedes Steuerprogramm 3. Der jeweils übergeordnete Subrechner 2 sendet daraufhin ein funktionsspezifisches Antwortsignal 10 zur Bestätigung der Konfiguration zurück. Dadurch, dass jedes Paar aus Freischaltsignal 6 und Antwortsignal 10 funktionsspezifisch entwickelt werden muss, geht dies mit einem hohen Programmieraufwand einher. Aufgrund der sukzessiven und zyklischen Übersendung der entsprechenden Signale steigt zudem die Auslastung der Datenleitung. Bei den jeweiligen Steuerprogrammen 3 kann es sich beispielsweise um die Software zur Steuerung einer Augmented-Reality Navigation, eines Anhänger Manövrierassistenten, einer Verkehrszeichenerkennung, eines Gangwechselprogramms, eines digitalen Lichtprojektors oder dergleichen handeln.

Figur 3 zeigt hingegen schematisch das erfindungsgemäße Vorgehen für den Datenaustausch. Das Freischaltmodul 5 stellt den Service 12 bereit, welcher besagten Ereignisdatensatz 7, Abfragesignal 9 und Antwortsignal 10 umfasst. Der Ereignisdatensatz 7 wird an die jeweiligen Subrechner 2 verteilt. Die Datenstruktur ist beispielhaft in Figur 3 als eine Tabelle veranschaulicht. In den jeweiligen Zeilen sind die generell verfügbaren Fahrzeugfunktionalitäten 4 enthalten. Die erste Spalte beschreibt dabei um welche Fahrzeugfunktionalität 4 es sich handelt und enthält somit einen eindeutigen Bezeichner wie einen Namen oder eine ID. In der zweiten Spalte ist der jeweilige Soll-Aktivierungszustand 8 für die jeweiligen Subrechner 2 enthalten. Da Subrechner 2 auch mehrere Fahrzeugfunktionalitäten 4 bereitstellen können, werden in Figur 3 teilweise mehrere Zeilen der Tabelle einem jeweiligen Subrechner 2 zugeordnet. Beispielhaft kann der Soll-Aktivierungszustand 8 drei Werte annehmen. Dies wären beispielsweise 0 für "inaktiv", 1 für "aktiv" und 2 für "nicht verfügbar". Der Ereignisdatensatz 7 wird dann als Freischaltsignal 6 an die Subrechner 2 verteilt. Die jeweiligen Subrechner 2 greifen auf die für den jeweiligen Subrechner 2 relevanten Einträge aus der Tabelle zu.

Der hier vorgestellte Aufbau der Fahrzeugelektronik erleichtert die künftige Integration von neu zu implementierenden Fahrzeugfunktionalitäten 4 erheblich. Es muss lediglich eine einzige Datenstruktur in Form des Ereignisdatensatzes 7 überarbeitet werden, um neue Fahrzeugfunktionalitäten 4 zu integrieren. Diese Implementierung kann generisch gestaltet werden, sodass keinerlei größeren und vor allem funktionalitätsspezifischen Anpassungen mehr vonnöten sind. Idealerweise können Änderungen durch einen Codegenerator erfolgen.

Das hier vorgestellte Kommunikationsschema erlaubt das Ausbilden einer einheitlichen Austauschschnittstelle. Dies erleichtert die Integration in das Gesamtsystem und erhöht den Reifegrad kontinuierlich. Da lediglich ereignisbasiert ein einzelner Ereignisdatensatz 7 versendet werden muss, lässt sich die Auslastung der Datenleitung, insbesondere in Form einer Buslast, reduzieren.

## Patentansprüche

1. Fahrzeug, umfassend einen Hauptrechner (1) und wenigstens einen kommunikativ an den Hauptrechner (1) angebundenen Subrechner (2), wobei ein jeweiliger Subrechner (2) zur Ausführung zumindest eines Steuerprogramms (3) zum Ansteuern einer Fahrzeugkomponente zur Bereitstellung einer Fahrzeugfunktionalität (4) eingerichtet ist, und der Hauptrechner ein Freischaltmodul (5) aufweist, welches dazu eingerichtet ist ein Freischaltsignal (6) an den wenigstens einen Subrechner (2) zum Aktivieren oder Deaktivieren des Steuerprogramms (3) zu versenden, wobei
das Freischaltmodul (5) einen Ereignisdatensatz (7) umfasst, wobei der Ereignisdatensatz (7) eine Zusammenstellung aller generell verfügbaren Fahrzeugfunktionalitäten (4) und ihren jeweiligen Soll-Aktivierungszustand (8) enthält,
**dadurch gekennzeichnet, dass**
das Freischaltmodul (5) dazu eingerichtet ist den Ereignisdatensatz (7) als Freischaltsignal (6) an alle angebundenen Subrechner (2) zu versenden, wobei ein jeweiliger Subrechner (2) dazu eingerichtet ist den Ereignisdatensatz (7) zu empfangen, zumindest den Soll-Aktivierungszustand (8) für die durch den respektiven Subrechner (2) bereitstellbaren Fahrzeugfunktionalitäten (4) aus dem Ereignisdatensatz (7) auszulesen und das jeweilig zugrunde liegende Steuerprogramm (3) gemäß des jeweiligen Soll-Aktivierungszustands (8) zu konfigurieren.

2. Fahrzeug nach Anspruch 1,
**dadurch gekennzeichnet, dass**
das Freischaltmodul (5) ferner dazu eingerichtet ist, den Ereignisdatensatz (7) während einer Zeitdauer mehrmals hintereinander zu versenden.

3. Fahrzeug nach Anspruch 1 oder 2,
**dadurch gekennzeichnet, dass**
ein jeweiliger Subrechner (2) dazu eingerichtet ist ein Abfragesignal (9) an den Hauptrechner (1) zu versenden und der Hauptrechner (1) dazu eingerichtet ist als Antwort auf das Abfragesignal (9) den Ereignisdatensatz (7) zumindest an den das Abfragesignal (9) ausgebenden Subrechner (2) zu versenden.

4. Fahrzeug nach einem der Ansprüche 1 bis 3,
**dadurch gekennzeichnet, dass**
ein jeweiliger Subrechner (2) ferner dazu eingerichtet ist, als Antwort auf den empfangenen Ereignisdatensatz (7) ein Antwortsignal (10) an den Hauptrechner (1) zu versenden, wobei das Antwortsignal (10) zumindest die durch den respektiven Subrechner (2) bereitstellbaren Fahrzeugfunktionalitäten (4) mit der jeweils vorgenommenen Konfiguration der zugrunde liegenden Steuerprogramme (3) enthält.

5. Fahrzeug nach einem der Ansprüche 1 bis 4,
**dadurch gekennzeichnet, dass**
der Hauptrechner (1) ferner dazu eingerichtet ist, den Ereignisdatensatz (7) bei jedem Starten des Fahrzeugs und/oder Aktivieren der Bordelektronik erneut zu versenden.

6. Fahrzeug nach einem der Ansprüche 1 bis 5,
**dadurch gekennzeichnet, dass**
der Hauptrechner (1) ferner dazu eingerichtet ist, einen Aktualisierungsdatensatz zu empfangen, wobei der Aktualisierungsdatensatz Änderungen des Ereignisdatensatzes (7) enthält, und den Ereignisdatensatz (7) entsprechend der Änderungen anzupassen.

7. Fahrzeug nach Anspruch 6,
**gekennzeichnet durch**
eine Telekommunikationseinheit, welche dazu eingerichtet ist den Aktualisierungsdatensatz drahtlos von einer zentralen Recheneinrichtung (11) zu empfangen und an den Hauptrechner (1) weiterzuleiten.

8. Fahrzeug nach einem der Ansprüche 1 bis 7,
**dadurch gekennzeichnet, dass**
ein jeweiliger Subrechner (2) dazu eingerichtet ist Änderungen für bestehende Steuerprogramme (3) und/oder neue Steuerprogramme (3) zu empfangen.

## Claims

1. Vehicle comprising a main computer (1) and at least one subcomputer (2) which is communicatively connected to the main computer (1), wherein a relevant subcomputer (2) is designed to execute at least one control program (3) for controlling a vehicle component to provide a
vehicle functionality (4), and the main computer has an enable module (5) which is designed to send an enable signal (6) to the at least one subcomputer (2) to activate or deactivate the control program (3), wherein
the enable module (5) has an event data record (7), wherein the event data record (7) contains a compilation of all generally available vehicle functionalities (4) and their relevant target activation state (8),
**characterized in that**
the enable module (5) is designed to send the event data record (7), as an enable signal (6), to all connected subcomputers (2), wherein a relevant subcomputer (2) is designed to receive the event data record (7), to read out at least the target activation state (8) for the vehicle functionalities (4) which can be provided by the relevant subcomputer (2) from the event data record (7), and to configure the relevant underlying control program (3) in accordance with the relevant target activation state (8).

2. Vehicle according to claim 1,
**characterized in that**
the enable module (5) is further designed to send the event data record (7) several times in succession over a period of time.

3. Vehicle according to claim 1 or claim 2,
**characterized in that**
a relevant subcomputer (2) is designed to send a query signal (9) to the main computer (1), and the main computer (1) is designed to send the event data record (7) as a response to the query signal (9) at least to the subcomputer (2) which outputs the query signal (9).

4. Vehicle according to any of claims 1 to 3,
**characterized in that**
a relevant subcomputer (2) is further designed to send a response signal (10) to the main computer (1) as a response to the received event data record (7), wherein the response signal (10) contains at least the vehicle functionalities (4) which can be provided by the relevant subcomputer (2), together with the relevant configuration of the underlying control programs (3).

5. Vehicle according to any of claims 1 to 4,
**characterized in that**
the main computer (1) is further designed to resend the event data record (7) each time the vehicle is started and/or the on-board electronics are activated.

6. Vehicle according to any of claims 1 to 5,
**characterized in that**
the main computer (1) is further designed to receive an update data record, wherein the update data record contains changes to the event data record (7), and to adapt the event data record (7) in accordance with the changes.

7. Vehicle according to claim 6,
**characterized by**
a telecommunications unit which is designed to wirelessly receive the update data record from a central computing device (11) and forward it to the main computer (1).

8. Vehicle according to any of claims 1 to 7,
**characterized in that**
a relevant subcomputer (2) is designed to receive changes for existing control programs (3) and/or new control programs (3).

## Revendications

1. Véhicule, comprenant un ordinateur principal (1) et au moins un sous-ordinateur (2) relié de manière communicative à l'ordinateur principal (1), dans lequel un sous-ordinateur (2) respectif est destiné à exécuter au moins un programme de commande (3) pour commander un composant du véhicule afin de fournir une fonctionnalité de véhicule (4), et l'ordinateur principal présente un module de libération (5) qui est destiné à envoyer un signal de libération (6) à l'au moins un sous-ordinateur (2) pour activer ou désactiver le programme de commande (3), dans lequel
le module de libération (5) comprend un jeu de données d'événements (7), dans lequel le jeu de données d'événements (7) contient une compilation de toutes les fonctionnalités de véhicule (4) généralement disponibles et leur état d'activation de consigne (8) respectif,
**caractérisé en ce que**
le module de libération (5) est destiné à envoyer le jeu de données d'événements (7) comme signal de libération (6) à tous les sous-ordinateurs (2) reliés, dans lequel un sous-ordinateur (2) respectif est destiné à recevoir le jeu de données d'événements (7), lire au moins l'état d'activation de consigne (8) pour les fonctionnalités de véhicule (4) pouvant être mises à disposition par le sous-ordinateur (2) respectif à partir du jeu de données d'événements (7) et configurer le programme de commande (3) respectif sous-jacent conformément à l'état d'activation de consigne (8) respectif.

2. Véhicule selon la revendication 1,
**caractérisé en ce que**
le module de libération (5) est en outre destiné à envoyer le jeu de données d'événements (7) plusieurs fois de suite pendant une période de temps.

3. Véhicule selon la revendication 1 ou 2,
**caractérisé en ce que**
un sous-ordinateur (2) respectif est destiné à envoyer un signal d'interrogation (9) à l'ordinateur principal (1) et l'ordinateur principal (1) est destiné à envoyer, en réponse au signal d'interrogation (9), le jeu de données d'événements (7) au moins au sous-ordinateur (2) émettant le signal d'interrogation (9).

4. Véhicule selon l'une des revendications 1 à 3,
**caractérisé en ce que**
un sous-ordinateur (2) respectif est en outre destiné à envoyer un signal de réponse (10) à l'ordinateur principal (1) en réponse au jeu de données d'événements (7) reçu, dans lequel le signal de réponse (10) contient au moins les fonctionnalités de véhicule (4) pouvant être mises à disposition par le sous-ordinateur (2) respectif avec la configuration respectivement effectuée des programmes de commande (3) sous-jacents.

5. Véhicule selon l'une des revendications 1 à 4,
**caractérisé en ce que**
l'ordinateur principal (1) est en outre destiné à envoyer à nouveau le jeu de données d'événements (7) à chaque démarrage du véhicule et/ou activation de l'électronique de bord.

6. Véhicule selon l'une des revendications 1 à 5,
**caractérisé en ce que**
l'ordinateur principal (1) est en outre destiné à recevoir un jeu de données de mise à jour, dans lequel le jeu de données de mise à jour contient des modifications de jeu de données d'événements (7), et à adapter le jeu de données d'événements (7) en fonction des modifications.

7. Véhicule selon la revendication 6,
**caractérisé par**
une unité de télécommunication, qui est destinée à recevoir sans fil le jeu de données de mise à jour d'un dispositif de calcul central (11) et à le transmettre à l'ordinateur principal (1).

8. Véhicule selon l'une des revendications 1 à 7,
**caractérisé en ce que**
un sous-ordinateur (2) respectif est destiné à recevoir des modifications pour des programmes de commande (3) existants et/ou de nouveaux programmes de commande (3).
